# EUROPEAN PATENT SPECIFICATION

(11) **EP 1 634 008 B1**
(45) Date of publication and mention of the grant of the patent: **19.09.2007**
(21) Application number: 03817277.1
(22) Date of filing: 21.07.2003
(51) Int. Cl.: F16L 33/08, F16L 25/00

(54) **BAND CLAMP**
BANDKLEMME
COLLIER DE SERRAGE BANDE

(30) Priority: 16.06.2003 PL 11413803
(43) Date of publication of application: 15.03.2006
(73) Proprietor: Variant S.A., PL-31-319 Krakow (PL)
(72) Inventor: CHOLEWA, Wieslaw, PL-32-080 Zabierzów (PL); Kolodziej, Leszek, PL-31-215 Kraków (PL)
(74) Representative: Kunicki, Jan
(86) International application number: PCT/PL2003/000070
(87) International publication number: WO 2004/111517

(56) References cited:
- EP-A- 0 623 777
- GB-A- 2 203 791

## Description

### Technical Field

The object of this invention is the band clamp applicable for joining flexible hoses, particularly hoses reinforced with wire wound so that the screw line is created.

### Background Art

The band clamps are known, serving clamping flexible pipes, constructed from rubber or plastic materials, on the socket pipes or pipes from stiff materials. Such clamps contain the metal tape, wrapping the pipe to be joined, as well as the tension-exerting complex, at the same time constituting the closure of the clamp. The steel tape, on which the anticorrosion protection is applied through electrolytic coating or galvanizing, is most often used, e.g. galvanized tape or stainless steel or acid-resistant steel tape. Usually, the tension-exerting complex contains the screw with worm thread, interacting with a portion of the tape equipped with transverse toothing.

Where clamping flexible pipes, reinforced e.g. with wire wound in the form of a screw line, is considered, the outer surface of the pipe is not cylindrical but has the shape of the screw surface. In such a case, the known clamps are cut through, following which the terminations of the clamp in the cutting place are moved away from one another towards the direction of the pipe axis so that the distance is made between them, equal to half the spiral lead of the pipe surface, to be finally joined with sheet link, butt welded to the terminations of the clamp in the place of clamp cutting. In its central part, the link accommodates the overpress allowing omitting the undercut of the reinforced surface of the flexible pipe. Such solution of the clamp does not allow the application of the tape coated with coating of any type, as the welding process will destroy this coating. Where the tape constructed from acid-resistant steel or stainless steel is used, welding causes the local intercrystalline corrosion within the weld, which may consequently contribute to fracturing and to breaking the joint of both terminations of the tape. In addition to the above, following drawing the terminations of the tape aside in the place of cutting and joining them with links perpendicular to the tape, the nominal diameter of the clamp reduces with relation to the nominal diameter prior to cutting.

A generic band clamp having a link viveted to both tape ends is known from EP-A-0623777.

### Disclosure of Invention

The clamp in accordance with the invention is free from the aforesaid disadvantages and problems.

A clamp in accordance with the invention contains the metal tape, cut through and joined in the cutting place by means of the link, and tension-exerting complex, constituting the clamp closure. The Z-shaped link accommodates the transverse element with overpress and two pieces of longitudinal elements equipped on both sides with wings bent and kneaded on the terminations of the tape. The terminations of the tape accommodate the lateral overpress with length slightly longer than the width of the wing which is bent and kneaded on this overpress. On their edges, the terminations of the tape accommodate the undercuts with width similar to the width of the wing, bent and kneaded on this undercut.

Owing to the unique construction of the link linking the cut-through terminations of the clamp, the application is made possible of tapes coated with protective coatings, as well as tapes constructed from stainless or acid-resistant steel, while the nominal diameter of the clamp following cutting and joining in the place of cutting by means of the Z-shaped link remains unchanged with relation to the nominal diameter of the clamp prior to cutting.

### Brief Description of Drawings

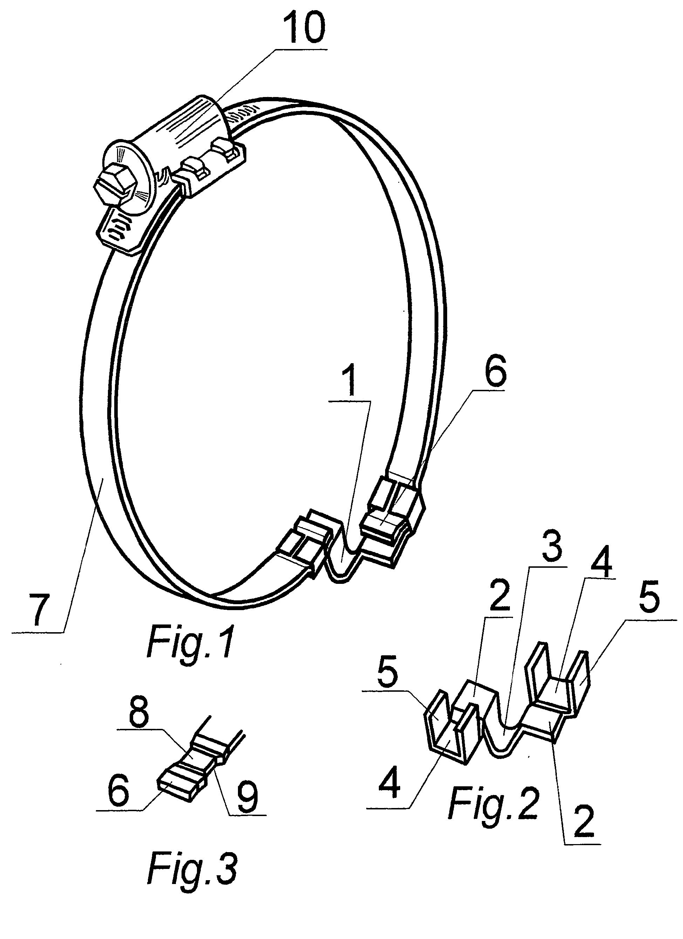

The clamp in accordance with the invention is shown on the attached drawings, where Figure 1 presents the general view of the clamp, the Figure 2 shows the general view of link prior to assembly, while the Figure 3 presents the termination of the clamp tape in the place of cut- through prior to assembly.

### Best Mode for Carrying Out the Invention

A clamp in accordance with the invention contains the metal tape 7, cut through and joined in the cutting place by means of the link 1, and tension exerting complex 10, constituting the clamp closure. The link 1 accommodates the lateral element 2 with overpress 3 and two pieces of longitudinal elements 4 equipped on both sides with wings 5 bent and kneaded in the course of the assembly on the terminations 6 of the tape 7. The terminations 6 of the tape 7 accommodate the lateral overpress 8 with length slightly longer than the width of the wing 5 which is bent and kneaded on this overpress 8. On their edges, the terminations 6 of the tape 7 accommodate the undercuts 9 with width similar to thickness of the link 1 sheet and with the length similar to the width of the wing 5, bent and kneaded on this undercut 9.

## Claims

1. Band clamp applicable for joining flexible pipes, particularly flexible pipes reinforced with wire, containing a metal tap (7) cut through and joined in the cutting place by means of a link,(1) as well as tension exerting complex (10, constituting the closure of the clamp, being **characterized in that** the link (1), in the shape of Z letter, accommodates the lateral element (2) and two pieces of longitudinal elements (4), equipped on both sides with wings (5), bent and kneaded on the terminations (6) of the tape (7).

2. Band clamp according to claim 1, being **characterized in that** the terminations (6) of the tape (7) accommodate the lateral overpress (8) with length slightly longer than the width of the wing (8) which is bent and kneaded on this overpress (8).

3. Band clamp according to claim 1, being **characterized in that** the terminations (6) of the tape (7) accommodate on their edges the undercuts (9) with width similar to thickness of the sheet of the link (1) and length similar to the width of the wing (5) bent and kneaded in this undercut (9).

## Patentansprüche

1. Der Bandklemme findet Anwendung bei der Verbindung von elastischen Leitungen, insbesondere von mit Draht verstärkten Leitungen, die sich aus geschnittenem Metallband und verbunden an der Schnittstelle mit dem Verbindungselement mit VVölbung, sowie der Verschlussvorrichtung zusammensetzen, **dadurch gekennzeichnet, dass** das Verbindungselement (1) in Form des Buchstaben Z über ein Querelement (2) sowie zwei Längselemente (4) verfügt, die an beiden Seiten mit an den Enden (6) des Bandes (7) umgebogenen und gequetschten Flügeln (5) ausgestattet sind.

2. Der Bandklemme nach Anspruch 1 **dadurch gekennzeichnet, dass** die Enden (6) des Bandes (7) eine quer verlaufende Perforierung (8) mit einer etwas größeren Länge als die Breite der Flügel (5) aufweisen, die an dieser Perforierung (8) umgebogen und gequetscht sind, wie in Abbildung 3 dargestellt.

3. Der Bandklemme nach Anspruch 1 **dadurch gekennzeichnet, dass** die Enden (6) des Bandes (7) an den Rändern einen Einschnitt (9) mit einer Breite ähnlich wie die Dicke des Blechs des Verbindungsstücks (1) und einer Länge ähnlich der Breite der Flügel (5) aufweisen, die an diesem Einschnitt (9) umgebogen und gequetscht sind, wie in Abbildung 3 dargestellt.

## Revendications

1. Collier de serrage bande servant à assembler les câbles élastiques, principalement les câbles armés avec les fils de fer, se compose d'une bande de métal coupée et reliée à l'endroit de la coupe par une liaison métallique courbée et d'un dispositif de tension qui sert à refermer le collier. Il se distingue par le fait que la liaison (1) en forme de lettre Z possède un élément transversal (2) et deux éléments longitudinaux (4) avec les ailettes latérales (5) repliés que l'on resserre sur les terminaisons (6) de la bande (7).

2. Le collier, selon la revendication 1, se distingue par le fait que les terminaisons (6) de la bande (7) ont une empreinte transversale (8) de longueur un peu plus grande que la largeur de l'ailette (5) qui est repliée et resserrée dans cette empreinte (8) comme le montre le dessin Fig. 3.

3. Le collier, selon la revendication 1, se distingue par te fait que les terminaisons (6) de la bande (7) ont sur les bords les encoches (9) de largeur proche de l'épaisseur de la tôle de liaison (1) et de longueur proche de largeur de l'ailette (5) qui est repliée et resserrée dans cette encoche (9) comme te démontre le dessin Fig. 3.
